# EUROPÄISCHE PATENTSCHRIFT

(11) **EP 2 205 879 B1**
(45) Veröffentlichungstag und Bekanntmachung des Hinweises auf die Patenterteilung: **09.11.2011**
(21) Anmeldenummer: 08787588.6
(22) Anmeldetag: 02.09.2008
(51) Int. Cl.: F16C 19/38, F16C 33/36, F16C 33/49, F16C 43/06

(54) **RADIALWÄLZLAGER, INSBESONDERE ZWEIREIHIGES SCHRÄGWÄLZLAGER MIT KUGELROLLEN**
RADIAL ROLLING BEARING ESPECIALLY DOUBLE-ROW ANGULAR CONTACT BEARING COMPRISING BALL ROLLERS
PALIER À ROULEMENT RADIAL NOTAMMENT PALIER À ROULEMENT OBLIQUE À DEUX RANGÉES COMPRENANT DES ROULEAUX SPHÉRIQUES

(30) Priorität: 04.10.2007 DE 102007047527
(43) Veröffentlichungstag der Anmeldung: 14.07.2010
(73) Patentinhaber: Schaeffler Technologies GmbH & Co. KG, 91074 Herzogenaurach (DE)
(72) Erfinder: BOHR, Andreas, 91074 Herzogenaurach (DE); DÖPPLING, Horst, 91074 Herzogenaurach (DE); HOFMANN, Heinrich, 97422 Schweinfurt (DE)
(86) Internationale Anmeldenummer: PCT/EP2008/061534
(87) Internationale Veröffentlichungsnummer: WO 2009/043664

(56) Entgegenhaltungen:
- DE-A1- 4 334 195
- DE-A1-102005 061 792
- GB-A- 141 694

## Beschreibung

### Gebiet der Erfindung

Die Erfindung betrifft ein Radialwälzlager nach den oberbegriffsbildenden Merkmalen des Patentanspruchs 1, und sie ist insbesondere an zweireihigen Schrägwälzlagern anwendbar, deren Wälzkörper als Kugelrollen mit jeweils zwei symmetrisch von einer Kugelgrundform abgeflachten, parallel zueinander angeordneten Seitenflächen ausgebildet sind.

Ein derartiges zweireihiges Schrägwälzlager ist aus GB 141 694 bekannt.

### Hintergrund der Erfindung

Zweireihige Schrägwälzlager finden überall dort Anwendung, wo durch die Lagerstelle neben hohen Radialkräften auch hohe Axialkräfte aus beiden Richtungen aufzunehmen sind. Die gebräuchlichste Ausführungsform solcher Schrägwälzlager stellt dabei das zweireihige Schrägkugellager dar, bei dem die beiden Reihen Lagerkugeln auf gegeneinander in O- oder X-Anordnung angestellten Druckwinkelachsen angeordnet sind. Um einen hohen Füllgrad mit Lagerkugeln und damit eine höchst mögliche Tragfähigkeit solcher Schrägkugellager zu erreichen, weisen diese entweder einseitig am äußeren Lagerring eine Füllnut oder einen axial zweigeteilt ausgebildeten inneren Lagerring auf.
Eine andere Möglichkeit, einen hohen Füllgrad mit Wälzkörpern und damit eine hohe Tragfähigkeit eines zweireihigen Schrägwälzlagers jedoch ohne Füllnut am äußeren Lagerring und ohne axial zweigeteilt ausgebildeten inneren Lagerring zu erreichen, wurde durch die DE 43 34 195 A1 bekannt. In dieser Druckschrift wird durch Figur 2e ein gattungsgemäßes zweireihiges Schrägwälzlager offenbart, welches im Wesentlichen aus einem äußeren Lagerring und einem inneren Lagerring sowie aus einer Vielzahl zwischen den Lagerringen in zwei Reihen nebeneinander angeordneter Wälzkörper besteht, die jedoch nicht als Lagerkugeln sondern als Kugelrollen mit jeweils zwei symmetrisch von einer -Kugelgrundform abgeflachten, parallel zueinander-angeordneten Seitenflächen ausgebildet sind. Beide Reihen der durch zwei Lagerkäfige in Umfangsrichtung in gleichmäßigen Abständen zueinander gehaltenen Kugelrollen rollen dabei in jeweils zwei benachbarten, in die Innenseite des äußeren Lagerrings und in die Außenseite des inneren Lagerrings eingearbeitete rillenförmigen Laufbahnen ab, deren Druckwinkelachsen in O-Anordnung gegeneinander angestellt sind und die axial einseitig durch jeweils eine Schulter begrenzt werden. Das Befüllen dieses Schrägwälzlagers soll dabei durch axiales Einführen der mit ihren Seitenflächen horizontal ausgerichteten Kugelrollen in den Abstand zwischen den Lagerringen und anschließendes Verkippen der Kugelrollen in die Laufbahnen des Schrägwälzlagers erfolgen. Nach dem gleichmäßigen Verteilen der Kugelrollen in ihren Laufbahnen in Umfangsrichtung werden dann von beiden Axialseiten des Lagers her die zwei, beispielsweise als Kunststoff-Schnappkäfige gemäß der mittleren Abbildung in Figur 3 der genannten Druckschrift ausgebildeten Lagerkäfige auf die Kugelrollen aufgeschnappt, um diese in ihrer Betriebstellung im Schrägwälzlager zu fixieren.

In der Praxis hat es sich jedoch erwiesen, dass bei einem derart ausgebildeten zweireihigen Schrägwälzlager die Montage der Kugelrollen in der beschriebenen Art und Weise nicht oder nur mit sehr hohem Aufwand möglich ist. Beim Versuch einer derartigen Montage der Kugelrollen hat es sich nämlich gezeigt, dass nachdem die Kugelrollen axial in den Abstand zwischen den Lagerringen bis zum Anschlag an ihrer Laufbahn im äußeren Lagerring eingeführt wurden, ein Verkippen der Kugelrollen in Richtung der Laufbahnen im inneren Lagerring nicht oder nur mit hohem Kraftaufwand möglich ist, da diese mit ihren zum äußeren Lagerring weisenden Seitenflächen an der Innenseite des äußeren Lagerrings verkanten. Selbst wenn es dann unter Ausnutzung von Toleranzen oder der Elastizität aller Teile gelingt, die Kugelrollen in Richtung der Laufbahnen im inneren Lagerring zu verkippen, stößt man abermals an die Grenzen der angegebenen Montagemöglichkeit, da es dabei häufig zum Durchrutschen der Kugelrollen zwischen den Lagerringen in Richtung der gegenüberliegenden Laufbahn im inneren Lagerring bzw. zum erneuten Verkanten der Kugelrollen an ihrer vorgesehenen Laufbahn im inneren Lagerring kommt. Außerdem hat es sich bei dem beschriebenen Lagerkäfig für das zweireihige Schrägwälzlager als nachteilig erwiesen, dass die mit den Schnappnasen ausgebildeten Taschenstege relativ breit ausgebildet sind und daher für einen größtmöglichen Füllgrad des Schrägwälzlagers noch kein Optimum darstellen. Ebenso ist es von Nachteil, dass für die Kugelrollen in den Taschen des Schnappkäfigs keine Bewegungsmöglichkeit besteht, sich an betriebsbedingte Schwankungen der Druckwinkelachsen anzupassen, so dass es bei solchen Druckwinkelschwankungen sehr wahrscheinlich zum Ausschnappen der Kugelrollen aus ihren Käfigtaschen und infolge dessen zu schweren Lagerschäden kommt.

### Aufgabe der Erfindung

Ausgehend von den dargelegten Nachteilen des bekannten Standes der Technik liegt der Erfindung deshalb die Aufgabe zu Grunde, ein Radialwälzlager, insbesondere zweireihiges Schrägwälzlager, zu konzipieren, welches problemlos im Axialmontageverfahren mit als Kugelrollen ausgebildeten Wälzkörpern befüllbar ist und dessen Lagerkäfig derart ausgebildet ist, dass ein größtmöglicher Füllgrad des Schrägwälzlagers gewährleistet und eine Anpassung der Kugelrollen an betriebsbedingte Schwankungen der Druckwinkelachsen möglich ist.

### Beschreibung der Erfindung

Erfindungsgemäß wird diese Aufgabe bei einem zweireihigen Schrägwälzlager nach dem Oberbegriff des Anspruchs 1 einesteils derart gelöst, dass im äußeren Lagerring jeweils in dessen Laufbahnen mündende und im Querschnitt keilförmige Ringnuten als zusätzliche Freiraumkonturen angeordnet sind, die zur Schaffung der notwendigen Bewegungsfreiheit zum Verkippen der Kugelrollen in ihre Betriebsstellung in den Laufbahnen beider Lagerringe vorgesehen sind. Diese keilförmigen Ringnuten sind jeweils mit ihrer in die Laufbahnen im äußeren Lagerring mündenden Keilfläche schräg zu den Axialseiten des Radialwälzlagers verlaufend in die Innenseite des äußeren Lagerrings eingearbeitet und weisen jeweils zusammen mit der angrenzenden Laufbahn eine etwas größer als der Durchmesser der Kugelrollen ausgebildete Länge sowie eine vom Druckwinkel des Lagers abhängige Tiefe auf, die mit steigendem Druckwinkel proportional größer wird. Die derart ausgebildeten Ringnuten schaffen somit den nötigen Freiraum, um das im Stand der Technik beschriebene Verkanten der Kugelrollen mit ihren Seitenflächen an der Innenseite des äußeren Lagerrings beim Einleiten des Verkippens in ihre Laufbahnen zu vermeiden.

Andernteils zeichnet sich das erfindungsgemäß ausgebildete Wälzlager darüber hinaus noch dadurch aus, dass im inneren Lagerring ein im Querschnitt keilförmiger und jeweils mit seinen Keilflächen in dessen Laufbahnen mündender Mittelbord als zusätzliche Stützkontur angeordnet ist, der zur Schwenkführung beim Verkippen der Kugelrollen in ihre Betriebsstellung in den Laufbahnen beider Lagerringe vorgesehen ist. Dieser keilförmige Mittelbord hat dabei etwa die Höhe wie die Schultern an den Laufbahnen des inneren Lagerrings und weist zwischen seinen Keilflächen einen Winkel auf, der abhängig ist vom Abstand der Laufbahnen im inneren Lagerring zueinander. Mit Hilfe eines derart ausgebildeten Mittelbordes ist es somit möglich, das im Stand der Technik beschriebene Durchrutschen der Kugelrollen zwischen den Lagerringen in Richtung der jeweils gegenüberliegenden Laufbahn im inneren Lagerring bzw. das erneute Verkanten der Kugelrollen an ihrer vorgesehenen Laufbahn im inneren Lagerring zu vermeiden und die Kugelrollen beim Verkippen in ihre Laufbahnen solange auf ihren Schwenkweg zu stützen, bis diese ihre endgültige Betriebsstellung in den Laufbahnen erreicht haben.

Bevorzugte Ausgestaltungen und Weiterbildungen des erfindungsgemäß ausgebildeten Radialwälzlagers werden in den Unteransprüchen 2 bis 4 beschrieben. Sie weisen ebenfalls zur Lösung der gestellten Aufgabe beitragende Merkmale auf.

Durch Anspruch 2 wird dabei vorgeschlagen, dass die Lagerkäfige für beide Reihen Wälzkörper bevorzugt jeweils als Manschetten-Schnappkäfige aus einem Kunststoff ausgebildet sind, bei denen an jeweils einem umlaufenden Käfigring axial einseitig mehrere, zwischen sich an die Kontur der Wälzkörper angepasste Käfigtaschen bildende Manschetten angeformt sind. Da die Käfigtaschen dabei zugleich an den Druckwinkel der jeweiligen Reihe Kugelrollen angepasst, also schräg in die Innenseite des Käfigrings eingearbeitet sind, weisen die Manschetten des Lagerkäfigs somit einen dreieckförmigen Profilquerschnitt auf, bei dem die zum inneren Lagerring weisende Dreieckspitze etwa auf Höhe des Teilkreises der Kugelrollen angeordnet ist. Bei der Montage des Lagerkäfigs schnappt diese Dreieckspitze der Manschetten dann geringfügig über die Durchmesserhälfte der Kugelrollen, so dass die Kugelrollen am Teilkreis nur durch diesen sehr schmalen Teil der Manschetten voneinander getrennt sind und dadurch, anders als die Taschenstege bei der im Stand der Technik genannten Lösung, einen größtmöglichen Füllgrad des Schrägwälzlagers gewährleisten.

Desweiteren ist es gemäß Anspruch 3 vorgesehen, auf der zum äußeren Lagerring weisenden Oberseite der Manschetten beider Lagerkäfige jeweils schräg zur Innenseite des äußeren Lagerrings ragende Schnappnasen anzuformen, die zur Lagefixierung der Lagerkäfige im Schrägwälzlager jeweils in die keilförmigen Ringnuten im äußeren Lagerring einrastbar sind. Die Schnappnasen weisen dabei aus Stabilitätsgründen bevorzugt die volle Breite der Oberseiten der Manschetten auf und sind in ihrer schrägen Anordnung und in ihrer Länge an den Winkel und an die Länge der Keilfläche der im äußeren Lagerring angeordneten Ringnut angepasst. Der besondere Vorteil einer solchen Lagefixierung der Lagerkäfige besteht dabei darin, dass die ursprünglich nur zur Montageerleichterung der Kugelrollen vorgesehenen Ringnuten im äußeren Lagerring somit für eine weitere Funktion genutzt werden können.

Schließlich wird es durch Anspruch 4 noch vorgeschlagen, dass der Boden aller Käfigtaschen in der Lagerkäfigen zur selbsttätigen Anpassung der als Kugelrollen ausgebildeten Wälzkörper an betriebsbedingte Schwankungen der Druckwinkelachsen in Umfangsrichtung zusätzlich leicht dachförmig ausgebildet ist. Unter leicht dachförmig ist dabei zu verstehen, dass der bereits an den Druckwinkel des Radialwälzlagers angepasste, schräg ausgebildete Boden der Käfigtaschen zusätzlich in Umfangsrichtung eine gleichmäßige keilförmige Erhöhung in Form eines Daches aufweist, deren Schräge beidseitig etwa 5° bis 10° beträgt. Dadurch ist es möglich, dass die Kugelrollen sich in ihren Taschen selbsttätig an Druckwinkelschwankungen zwischen 10° und 20° anpassen können, ohne dass es dabei zum Ausschnappen der Kugelrollen aus ihren Käfigtaschen kommt.

Zusammenfassend weist das erfindungsgemäß ausgebildete Radialwälzlager somit gegenüber den aus dem Stand der Technik bekannten Radialwälzlagern den Vorteil auf, dass es durch die Ausbildung mit zusätzlichen Freiraum- und Stützkonturen an den Laufbahnen der Wälzkörper im inneren und im äußeren Lagerring problemlos im Axialmontageverfahren mit als Kugelrollen ausgebildeten Wälzkörpern befüllbar ist. Gleichzeitig wird durch die Ausbildung der Lagerkäfige beider Reihen Kugelrollen als Manschetten Schnappkäfige mit am Teilkreis extrem schmal ausgebildeten Manschetten und mit dachförmig ausgebildetem Boden aller Käfigtaschen erreicht, dass ein größtmöglicher Füllgrad des Schräg-wälzlagers gewährleistet und eine Anpassung der Kugelrollen an betriebsbedingte Schwankungen der Druckwinkelachsen möglich ist.

### Kurze Beschreibung der Zeichnungen

Eine bevorzugte Ausführungsform des erfindungsgemäß ausgebildeten Radialwälzlagers wird nachfolgend unter Bezugnahme auf die beigefügten Zeichnungen näher erläutert. Dabei zeigen:
- Figur 1: einen Querschnitt durch ein als zweireihiges Schrägkugelrollelager in O-Anordnung ausgebildetes erfindungsgemäßes Radialwälzlager;
- Figur 2: eine vergrößerte Darstellung der Einzelheit X des erfindungsgemäß ausgebildeten Radialwälzlagers gemäß Figur 1;
- Figur 3: eine vergrößerte Darstellung der Einzelheit Y des erfindungsgemäß ausgebildeten Radialwälzlagers gemäß Figur 1;
- Figur 4: eine vergrößerte räumliche Darstellung von der Rückseite eines mit Kugelrollen bestückten Lagerkäfigs des erfindungsgemäß ausgebildeten Radialwälzlagers;
- Figur 5: eine vergrößerte räumliche Darstellung von der Vorderseite eines Lagerkäfigs des erfindungsgemäß ausgebildeten Radialwälzlagers ohne Kugelrollen.

### Ausführliche Beschreibung der Zeichnungen

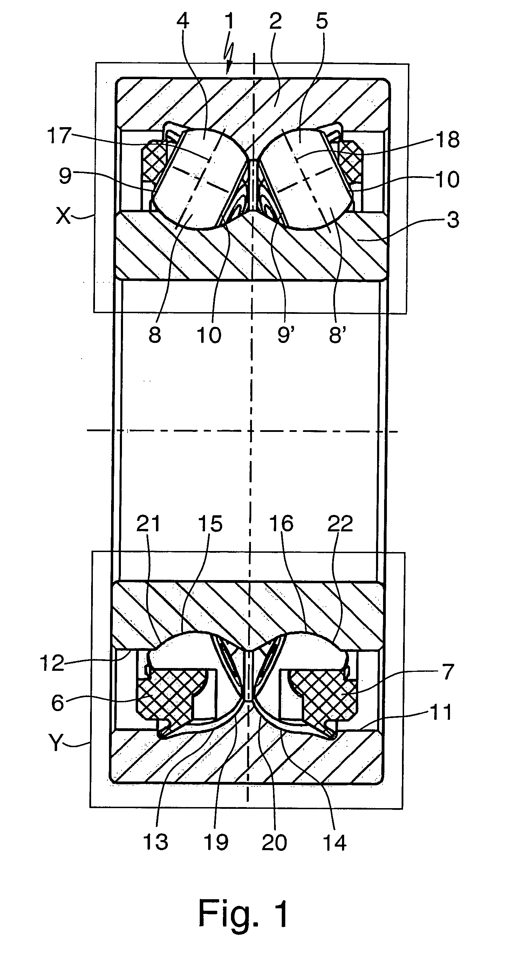

Aus Figur 1 geht deutlich ein als zweireihiges Schrägwälzlager 1 ausgebildetes Radialwälzlager hervor, welches im Wesentlichen aus einem äußeren Lagerring 2 und einem inneren Lagerring 3 sowie aus einer Vielzahl zwischen den Lagerringen 2, 3 in zwei Reihen 4, 5 nebeneinander angeordneter Wälzkörper 8, 8' besteht, die in beiden Reihen 4, 5 als Kugelrollen mit jeweils zwei symmetrisch von einer Kugelgrundform abgeflachten, parallel zueinander angeordneten Seitenflächen 9, 9', 10, 10' ausgebildet sind. Beide Reihen 4, 5 der durch zwei Lagerkäfige 6, 7 in Umfangsrichtung in gleichmäßigen Abständen zueinander gehaltenen Wälzkörper 8, 8' rollen dabei in jeweils zwei benachbarten, in die Innenseite 11 des äußeren Lagerrings 2 und in die Außenseite 12 des inneren Lagerrings 3 eingearbeitete rillenförmigen Laufbahnen 13, 14 und 15, 16 ab, deren Druckwinkelachsen 17, 18 in O-Anordnung gegeneinander angestellt sind und die axial einseitig durch jeweils eine Schulter 19, 20, 21, 22 begrenzt werden.

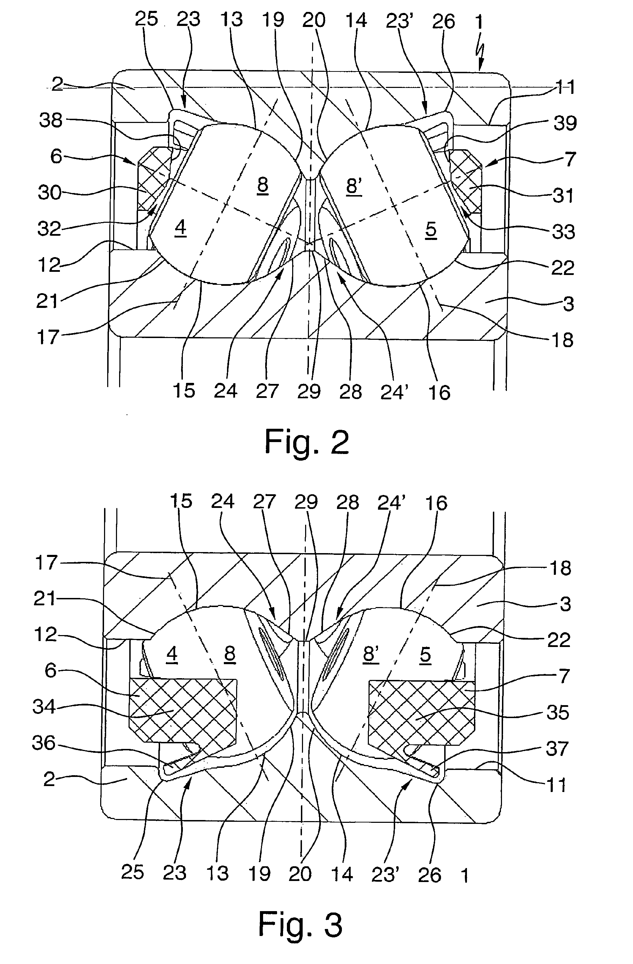

Die vergrößerten Darstellungen der Figuren 2 und 3 zeigen darüber hinaus, dass an die im äußeren Lagerring 2 und im inneren Lagerring 3 angeordneten Laufbahnen 13, 14, 15, 16 der als Kugelrollen ausgebildeten Wälzkörper 8, 8' erfindungsgemäß jeweils im Bereich der ihren Schultern 19, 20, 21, 22 gegenüberliegenden axialen Randpartien zusätzliche Freiraum- und Stützkonturen 23, 23', 24, 24' angeformt sind, mittels welcher die Kugelrollen durch axiales Einführen in den Abstand zwischen den Lagerringen 2, 3 und anschließendes Verkippen in die Laufbahnen 13, 14, 15, 16 in das Schrägwälzlager 1 einfüllbar sind. Als zusätzliche Freiraumkonturen 23, 23' sind dabei deutlich sichtbar im äußeren Lagerring 2 zwei in dessen Laufbahnen 13, 14 mündende und im Querschnitt keilförmige Ringnuten 25, 26 angeordnet, die zur Schaffung der notwendigen Bewegungsfreiheit zum Verkippen der Kugelrollen in ihre Betriebsstellung in den Laufbahnen 13, 14 und 15, 16 beider Lagerringe 2, 3 vorgesehen sind. Die zusätzliche Stützkonturen 24, 24' werden dagegen durch einen im Querschnitt keilförmigen und mit seinen Keilflächen 27, 28 in die Laufbahnen 15, 16 im inneren Lagerring 3 mündenden Mittelbord 29 gebildet, der zur Schwenkführung beim Verkippen der Kugelrollen in ihre Betriebsstellung in den Laufbahnen 13, 14 und 15, 16 beider Lagerringe 2, 3 vorgesehen ist.

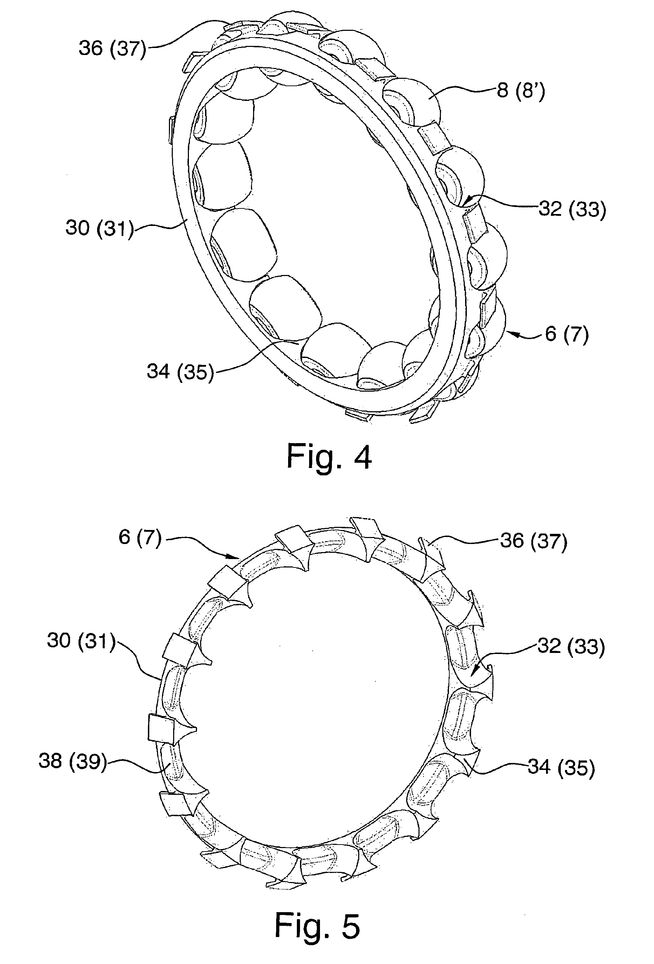

In den Figuren 4 und 5 ist schließlich noch dargestellt, dass die Lagerkäfige 6, 7 für beide Reihen 4, 5 der Wälzkörper 8, 8' jeweils als Manschetten-Schnappkäfige aus einem Kunststoff ausgebildet sind, bei denen an jeweils einem umlaufenden Käfigring 30, 31 axial einseitig mehrere, zwischen sich an die Kontur der Wälzkörper 8, 8' angepasste Käfigtaschen 32, 33 bildende Manschetten 34, 35 angeformt sind. Auf der zum äußeren Lagerring 3 weisenden Oberseite der Manschetten 34, 35 beider Lagerkäfige 6, 7 sind dabei jeweils schräg zur Innenseite 11 des äußeren Lagerrings 3 ragende Schnappnasen 36, 37 angeformt, die, wie aus den Figuren 1 und 3 ersichtlich ist, zur Lagefixierung der Lagerkäfige 6, 7 im Schrägwälzlager 1 jeweils in die keilförmigen Ringnuten 27, 28 im äußeren Lagerring 3 einrastbar sind. Darüber hinaus ist in Figur 5 erkennbar, dass der Boden 38, 39 aller Käfigtaschen 32, 33 in den Lagerkäfigen 6, 7 in Umfangsrichtung zusätzlich leicht dachförmig ausgebildet ist, um eine selbsttätigen Anpassung der als Kugelrollen ausgebildeten Wälzkörper 8, 8' an betriebsbedingte Schwankungen der Druckwinkelachsen 17, 18 zu ermöglichen. Die Schräge dieses dachförmigen Bodens 38, 39 beträgt dabei beidseitig etwa 5° bis 10°, so dass sich die Kugelrollen in ihren Taschen an Druckwinkelschwankungen zwischen 10° und 20° anpassen können, ohne dass es dabei zum Ausschnappen der Kugelrollen aus ihren Käfigtaschen 32, 33 kommt.

### Bezugszahlenliste

| | | | |
|---|---|---|---|
| 1 | Schrägwälzlager | 20 | Schulter an 14 |
| 2 | äußerer Lagerring | 21 | Schulter an 15 |
| 3 | innerer Lagerring | 22 | Schulter an 16 |
| 4 | Reihe | 23 | Freiraumkontur |
| 5 | Reihe | 23' | Freiraumkontur |
| 6 | Lagerkäfig von 4 | 24 | Stützkontur |
| 7 | Lagerkäfig von 5 | 24' | Stützkontur |
| 8 | Wälzkörper von 4 | 25 | Ringnut |
| 8' | Wälzkörper von 5 | 26 | Ringnut |
| 9 | Seitenfläche von 8 | 27 | Keilfläche von 29 |
| 9' | Seitenfläche von 8' | 28 | Keilfläche von 29 |
| 10 | Seitenfläche von 8 | 29 | Mittelbord |
| 10' | Seitenfläche von 8' | 30 | Käfigring von 6 |
| 11 | Innenseite von 2 | 31 | Käfigring von 7 |
| 12 | Außenseite von 3 | 32 | Käfigtasche in 6 |
| 13 | Laufbahn in 2 | 33 | Käfigtasche in 7 |
| 14 | Laufbahn in 2 | 34 | Manschetten an 6 |
| 15 | Laufbahn in 3 | 35 | Manschetten an 7 |
| 16 | Laufbahn in 3 | 36 | Schnappnasen auf 34 |
| 17 | Druckwinkelachse von 4 | 37 | Schnappnasen auf 35 |
| 18 | Druckwinkelachse von 5 | 38 | Boden von 32 |
| 19 | Schulter an 13 | 39 | Boden von 33 |

## Patentansprüche

1. Radialwälzlager, insbesondere zweireihiges Schrägwälzlager (1), im Wesentlichen bestehend aus einem äußeren Lagerring (2) und einem inneren Lagerring (3) sowie aus einer Vielzahl zwischen den Lagerringen (2, 3) in zwei Reihen (4, 5) nebeneinander angeordneter und durch zwei Lagerkäfige (6, 7) in Umfangsrichtung in gleichmäßigen Abständen zueinander gehaltener Wälzkörper (8, 8'), die als Kugelrollen mit jeweils zwei symmetrisch von einer Kugelgrundform abgeflachten, parallel zueinander angeordneten Seitenflächen (9, 9', 10, 10') ausgebildet sind, wobei beide Reihen (4, 5) der Wälzkörper (8, 8') in jeweils zwei benachbarten, in die Innenseite (11) des äußeren Lagerrings (2) und in die Außenseite (12) des inneren Lagerrings (3) eingearbeitete rillenförmigen Laufbahnen (13, 14 und 15, 16) abrollen, deren Druckwinkelachsen (17, 18) in O- oder X-Anordnung gegeneinander angestellt sind und die axial einseitig durch jeweils eine Schulter (19, 20, 21, 22) begrenzt werden, **dadurch gekennzeichnet, dass** im äußeren Lagerring (2) jeweils in dessen Laufbahnen (13, 14) mündende und im Querschnitt keilförmige Ringnuten (25, 26) als zusätzliche Freiraumkonturen (23, 23') angeordnet sind, die zur Schaffung der notwendigen Bewegungsfreiheit zum Verkippen der Kugelrollen in ihre Betriebsstellung in den Laufbahnen (13, 14 und 15, 16) beider Lagerringe (2, 3) vorgesehen sind, während im inneren Lagerring (3) ein im Querschnitt keilförmiger und jeweils mit seinen Keilflächen (27, 28) in dessen Laufbahnen (15, 16) mündender Mittelbord (29) als zusätzliche Stützkontur (24, 24') angeordnet ist, der zur Schwenkführung beim Verkippen der Kugelrollen in ihre Betriebsstellung in den Laufbahnen (13, 14 und 15, 16) beider Lagerringe (2, 3) vorgesehen ist.

2. Radialwälzlager nach Anspruch 1, **dadurch gekennzeichnet, dass** die Lagerkäfige (9, 10) für beide Reihen (4, 5) Wälzkörper (8, 8') bevorzugt jeweils als Manschetten-Schnappkäfige aus einem Kunststoff ausgebildet sind, bei denen an jeweils einem umlaufenden Käfigring (30, 31) axial einseitig mehrere, zwischen sich an die Kontur der Wälzkörper (8, 8') angepasste Käfigtaschen (32, 33) bildende Manschetten (34, 35) angeformt sind.

3. Radialwälzlager nach Anspruch 2, **dadurch gekennzeichnet, dass** auf der zum äußeren Lagerring (3) weisenden Oberseite der Manschetten (34, 35) beider Lagerkäfige (9, 10) jeweils schräg zur Innenseite (11) des äußeren Lagerrings (3) ragende Schnappnasen (36, 37) angeformt sind, die zur Lagefixierung der Lagerkäfige (9, 10) im Schrägwälzlager (1) jeweils in die keilförmigen Ringnuten (27, 28) im äußeren Lagerring (3) einrastbar sind.

4. Radialwälzlager nach Anspruch 3, **dadurch gekennzeichnet, dass** der Boden (38, 39) aller Käfigtaschen (32, 33) in den Lagerkäfigen (9, 10) zur selbsttätigen Anpassung der als Kugelrollen ausgebildeten Wälzkörper (8, 8') an betriebsbedingte Schwankungen der Druckwinkelachsen (17, 18) in Umfangsrichtung zusätzlich leicht dachförmig ausgebildet ist.

## Claims

1. Radial rolling bearing, especially double-row angular contact rolling bearing (1) composed essentially of an outer bearing ring (2) and an inner bearing ring (3) as well as a multiplicity of rolling bodies (8, 8') which are arranged one next to the other in two rows (4, 5) between the bearing rings (2, 3) and are held at uniform distances from one another in the circumferential direction by means of two bearing cages (6, 7), which rolling bodies (8, 8') are embodied as ball rollers with, in each case, two side faces (9, 9', 10, 10') which are flattened symmetrically from a basic ball shape and are arranged parallel to one another, wherein the two rows (4, 5) of the rolling bodies (8, 8') roll in, in each case, two adjacent groove-shaped raceways (13, 14 and 15, 16) which are formed in the inner side (11) of the outer bearing ring (2) and in the outer side (12) of the inner bearing ring (3), the contact angle axes (17, 18) of which raceways (13, 14 and 15, 16) are positioned in an O or X arrangement with respect to one another and are bounded axially on one side by one shoulder (19, 20, 21, 22) in each case, **characterized in that** annular grooves (25, 26), which each open in the outer bearing ring (2), in each case in raceways (13, 14) thereof, and are wedge-shaped in cross section, are arranged as additional free space contours (23, 23') which are provided in order to bring about the necessary freedom of movement in order to tilt the ball rollers into their operating position in the raceways (13, 14 and 15, 16) of the two bearing rings (2, 3), while arranged as an additional supporting contour (24, 24') in the inner bearing ring (3) is a central rim (29), which is wedge-shaped in cross section, opens in each case with its wedge faces (27, 28) into the raceways (15, 16) of said bearing ring (3) and is provided for carrying out pivoting guidance during the tilting of the ball rollers into their operating position in the raceways (13, 14 and 15, 16) of the two bearing rings (2, 3).

2. Radial rolling bearing according to Claim 1, **characterized in that** the bearing cages (9, 10) for the two rows (4, 5) of rolling bodies (8, 8') are each preferably embodied as collar snap-action cages from a plastic, in which bearing cages (9, 10) a plurality of collars (34, 35) which, between them, form cage pockets (32, 33) which are adapted to the contour of the rolling bodies (8, 8') are integrally formed axially on one side of in each case one circumferential cage ring (30, 31).

3. Radial rolling bearing according to Claim 2, **characterized in that** snap-action projections (36, 37), which each project obliquely with respect to the inner side (11) of the outer bearing ring (3), are integrally formed on the upper side of the collars (34, 35), pointing to the outer bearing ring (3), of the two bearing cages (9, 10), which snap-action projections (36, 37) can each be latched into the wedge-shaped annular grooves (27, 28) in the outer bearing ring (3) in order to fix the bearing cages (9, 10) in position in the angular contact rolling bearing (1).

4. Radial rolling bearing according to Claim 3, **characterized in that** the base (38, 39) of all the cage pockets (32, 33) in the bearing cages (9, 10) are additionally embodied in a slight roof shape in order to automatically adapt the rolling bodies (8, 8'), formed as ball rollers, to operationally conditioned fluctuations in the contact angle axes (17, 18) in the circumferential direction.

## Revendications

1. Palier à roulement radial, notamment palier à roulement radial (1) à deux rangées, essentiellement constitué d'une bague de palier extérieure (2) et d'une bague de palier intérieure (3) ainsi que d'une pluralité de corps de roulement (8, 8') disposés les uns à côté des autres entre les bagues de palier (2, 3) en deux rangées (4, 5) et maintenus à distance uniforme les uns des autres dans la direction périphérique par deux cages de palier (6, 7), les corps de roulement étant réalisés sous forme de rouleaux sphériques avec à chaque fois deux parois latérales (9, 9', 10, 10') disposées parallèlement l'une à l'autre, réalisées symétriquement et de manière aplatie par rapport à une forme de base sphérique, les deux rangées (4, 5) de corps de roulement (8, 8') roulant à chaque fois dans deux pistes de roulement adjacentes (13, 14 et 15, 16) en forme de gorges pratiquées dans le côté intérieur (11) de la bague de palier extérieure (2) et dans le côté extérieur (12) de la bague de palier intérieure (3), dont les axes d'angle de pression (17, 18) sont inclinés suivant un agencement en O ou en X l'un par rapport à l'autre, et qui sont limitées axialement d'un côté par un épaulement respectif (19, 20, 21, 22), **caractérisé en ce que** dans la bague de palier extérieure (2) sont disposées à chaque fois des rainures annulaires (25, 26) de section transversale en forme de clavette et débouchant dans ses pistes de roulement (13, 14), servant de contours d'espace libre supplémentaires (23, 23'), lesquelles sont prévues pour fournir la liberté de mouvement nécessaire pour le basculement des rouleaux sphériques dans leur position fonctionnelle dans les pistes de roulement (13, 14 et 15, 16) des deux bagues de palier (2, 3), tandis que dans la bague de palier intérieure (3) est disposé un bord central (29) de section transversal en forme de clavette et débouchant à chaque fois avec ses surfaces de clavette (27, 28) dans ses pistes de roulement (15, 16), en tant que contour de support supplémentaire (24, 24'), qui est prévu pour le guidage par pivotement lors du basculement des rouleaux sphériques dans leur position fonctionnelle dans les pistes de roulement (13, 14 et 15, 16) des deux bagues de palier (2, 3).

2. Palier à roulement radial selon la revendication 1, **caractérisé en ce que** les cages de palier (9, 10) pour les deux rangées (4, 5) de corps de roulement (8, 8') sont réalisées de préférence à chaque fois sous forme de cages encliquetables à manchettes en un matériau plastique, dans lesquelles sur une bague de cage périphérique respective (30, 31) sont façonnées axialement d'un côté plusieurs manchettes (34, 35) formant entre elles des cavités de cage (32, 33) adaptées au contour des corps de roulement (8, 8').

3. Palier à roulement radial selon la revendication 2, **caractérisé en ce que** sur le côté supérieur des manchettes (34, 35) tourné vers la bague de palier extérieure (3) des deux cages de palier (9, 10) sont à chaque fois façonnés des nez d'encliquetage (36, 37) saillant obliquement vers le côté intérieur (11) de la bague de palier extérieure (3), lesquels peuvent être encliquetés pour la fixation en position des cages de palier (9, 10) dans le palier à roulement oblique (1) à chaque fois dans les rainures annulaires en forme de clavette (27, 28) dans la bague de palier extérieure (3).

4. Palier à roulement radial selon la revendication 3, **caractérisé en ce que** le fond (38, 39) de toutes les cavités de cage (32, 33) dans les cages de palier (9, 10) est réalisé dans la direction périphérique de plus légèrement en forme de toit pour l'adaptation automatique des corps de roulement (8, 8') réalisés sous forme de rouleaux sphériques à des variations fonctionnelles des axes d'angles de pression (17, 18).
